# EUROPEAN PATENT APPLICATION

(11) **EP 1 519 543 A1**
(43) Date of publication of application: **30.03.2005**
(21) Application number: 02741375.6
(22) Date of filing: 01.07.2002
(51) Int. Cl.: H04M 1/02, G06K 17/00

(54) **CELL PHONE**

(71) Applicant: MITSUBISHI DENKI KABUSHIKI KAISHA, Tokyo 100-8310 (JP)
(72) Inventor: HASEGAWA, Manabu, c/o Mitsubishi Denki KK, Tokyo 100-8310 (JP)
(74) Representative: Sajda, Wolf E., Dipl.-Phys.
(86) International application number: PCT/JP2002/006629
(87) International publication number: WO 2004/004292

(57) **Abstract**

A cellular phone (1), (30), (60), (70) in which different types of plural cards (5), (6) are freely detachably mounted, is equipped with a housing (2), (31), (71), a first accommodating portion (4) which is formed in the housing and accommodates therein a battery pack (3), and a second accommodating portion (7) which is formed on a position which is non-overlapped with the first accommodating portion (4) of the housing and accommodates therein the different types of plural cards (5), (6) so that the plural cards are stacked.

## Description

### TECHNICAL FIELD

The present invention relates to a cellular phone, and particularly to a cellular phone which is improved so that the thickness thereof can be reduced and parts thereof can be simplified.

### BACKGROUND ART

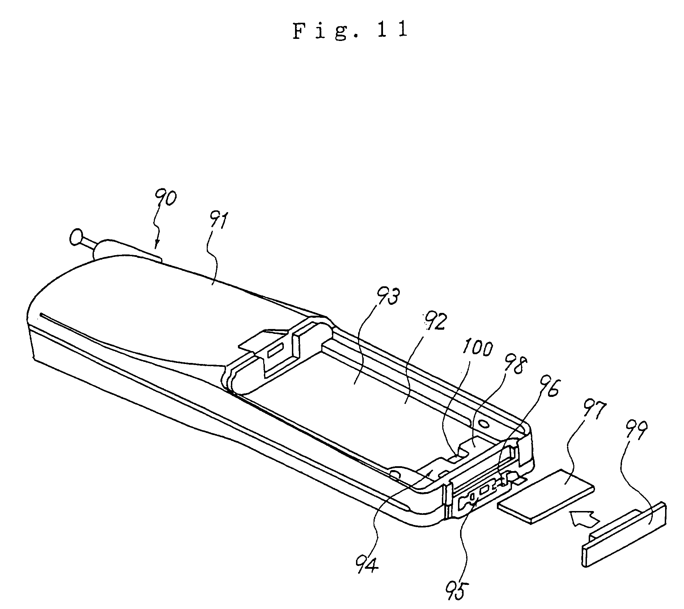

A prior art disclosed in JP-A-10-190803 has been known. The construction of a cellular phone disclosed in this prior art will be described with reference to Fig. 11. In Fig. 11, 90 represents a cellular phone, 91 represents a housing of the cellular phone 90, and 92 represents a recess portion formed in the housing 91. A battery pack (not shown) is mounted on the recess portion. 93 represents a board equipped in the housing 91, and the board 93 is electrically connected to the battery pack through metal fittings (not shown) equipped on the surface of the recess portion 92. 94 represents a composite connector equipped to the recess portion 92, 95 represents an external interface connector equipped to the composite connector 94, 96 represents a memory-card inserting/ejecting port equipped to the composite connector 94, 97 represents a memory card to be inserted to the memory-card inserting/ejecting port 96, 98 represents a memory-card mount portion which is equipped to the composite connector 94 and in which the memory card 97 inserted from the memory-card inserting/ejecting port 96 is mounted, 99 represents a dustproof lid for preventing invasion of dust into the external interface connector 95 and the memory-card mount portion 98, and 100 represents a memory-card take-off notch equipped to the memory-card mount portion 98 to extrude and take off the memory card 97 from the memory-card mount portion 98.

In the cellular phone shown in Fig. 11, when the memory card 97 is required to be loaded in the cellular phone 90, the dustproof lid 99 is detached from the housing 91, and the memory card 97 is mounted in the memory-card mount portion 98. The memory card 97 transmits /receives information to/from the board 93 while mounted in the memory-card mount portion 98. After the memory card 97 is mounted in the memory-card mount portion 98, the dustproof lid 99 is secured so that no dust invades into the memory-card mount portion 98. When an interface of an external device is required to be mounted in the cellular phone 90, the dustproof lid 99 is detached from the housing 91, and the interface of the external device is connected to the connector 95 of the external interface. The connection between the interface of the external device and the external interface connector 95 causes the cellular phone 90 to be electrically connected to the external device.

According to the cellular phone as described above, the memory card 97 and the interface of the external device can be mounted in the cellular phone 90, and further the memory card 97 and the interface of the external device are connected to the composite connector 94 comprising a single part, so that some part can be made common, and miniaturization of the cellular phone 90 and simplification of parts can be promoted.

However, the conventional cellular phone has the following problem.

First, the composite connector 94 in which the interface of the external device and the memory card 97 are mounted is equipped at a position which is overlapped with a position at which a battery pack is mounted in the housing 91, and thus it is required to increase the thickness of the cellular phone 90 up to the total dimension of the thickness of the battery pack and the thickness of the composite connector 94, so that the thickness of the cellular phone is large.

Furthermore, the composite connector 94 in which the interface of the external device and the memory card 97 are mounted is used, however, the composite connector 94 is large in volume, which obstructs miniaturization of the cellular phone.

Furthermore, the external interface connector 95 and the memory-card mount portion 98 are collectively accommodated in the housing 91, and thus it is impossible to collectively accommodate all the cards in the housing 91.

The present invention ameliorates the above problem, and has the following objects.

A first object of the present invention is to propose an improved cellular phone which enables reduction in thickness.

A second object of the present invention is to propose an improved cellular phone which enables reduction in thickness and also simplification of parts.

### DISCLOSURE OF INVENTION

A cellular phone according to the present invention is the cellular phone in which different types of plural cards are freely detachably mounted, and the cellular phone includes a housing having a first accommodating portion and a second accommodating portion, wherein the second accommodating portion is disposed on a position which is non-overlapped with the first accommodating portion, the first accommodating portion accommodates a battery pack, and the second accommodating portion accommodates the different types of plural cards while the card are stacked.

In the cellular phone of the present invention, it is preferable that the second accommodating portion is designed so as to check whether at least one of the different types of plural cards is mounted in the cellular phone.

In the cellular phone of the present invention, it is preferable that the second accommodating portion has windows formed on the housing, and the plural cards are different in size, and a smaller card is disposed to be nearer to the windows such that the positions for the plural cards different in size can be checked from the windows.

In the cellular phone of the present invention, it is preferable that the second accommodating portion has plural card inserting/ejecting ports and one of the plural card inserting/ejecting ports is covered by the battery pack.

Furthermore, in the cellular phone of the present invention, it is preferable that the battery pack has a member covering the one of the plural card inserting/ejecting ports.

### BRIEF DESCRIPTION OF THE DRAWINGS

Fig. 1 is a perspective view showing an embodiment 1 of a cellular phone according to the present invention.

Fig. 2 is a perspective view showing a connector device of the embodiment 1.

Fig. 3 is an exploded perspective view showing the connector device of the embodiment 1.

Fig. 4 is a diagram showing the construction of a take-out mechanism portion used in the present invention.

Fig. 5 is an enlarged view of detecting means used in the present invention.

Fig. 6 is a perspective view showing an embodiment 2 of the cellular phone according to the present invention.

Fig. 7 is a perspective view showing a connector device of the embodiment 2.

Fig. 8 is a perspective view showing an embodiment 3 of the cellular phone according to the present invention.

Fig. 9 is a perspective view showing an embodiment 4 of the cellular phone according to the present invention.

Fig. 10 is a perspective view showing a connector device of the embodiment 4.

Fig. 11 is a perspective view of a conventional cellular phone.

### BEST MODES FOR CARRYING OUT THE INVENTION

In order to describe the present invention in detail, best modes for carrying out the present invention will be described with reference to the accompanying drawings.

### Embodiment 1

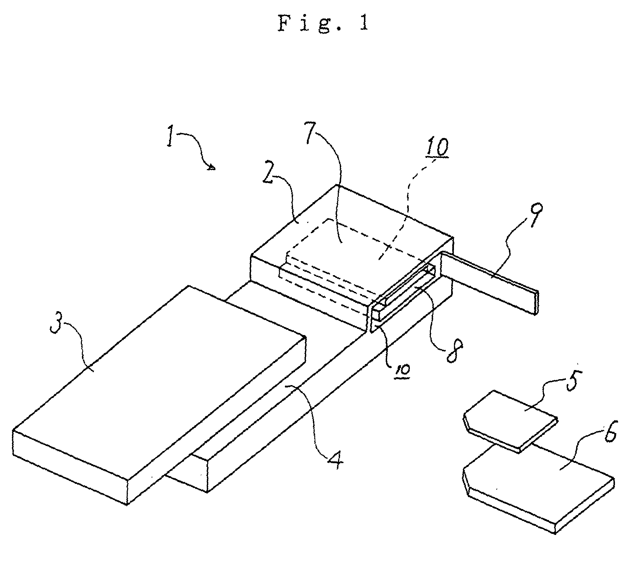

The construction of an embodiment 1 according to the present invention will be described with reference to Fig. 1.

In Fig. 1, 1 represents a cellular phone according to the embodiment 1, 2 represents a housing of the cellular phone 1, 3 represents a battery pack used for the cellular phone 1, and 4 represents a first accommodating portion which is formed in the housing 2 by stepping the housing 2 and on which the battery pack 3 is mounted. 5 represents an SIM (Subscriber Identity Module) card. The SIM card 5 is a card in which personal information such as an owner of the cellular phone 1, etc. are stored, and it is used to identify an individual. 6 represents a memory card for storing image information, etc. 7 represents a second accommodating portion formed in the housing 2, and it is constructed by forming an accommodation hole in the housing 2 so that a connector device 10 is accommodated and held. The connector device 10 accommodates and holds the SIM card 5 and the memory card 6. 8 represents a card inserting/ejecting port formed at the front wall of the connector device 10. 9 represents a multi-functional lid secured to the card inserting/ejecting port 8, and it prevents invasion of dust into the connector device 10 and supports the SIM card 5 and the memory card 6 so that the positions of the SIM card 5 and the memory card 6 are fixed in the connector device 10.

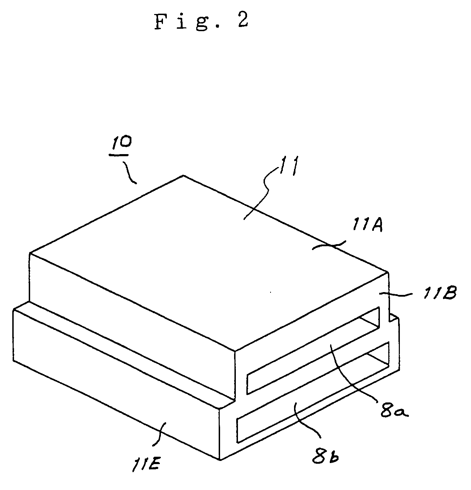

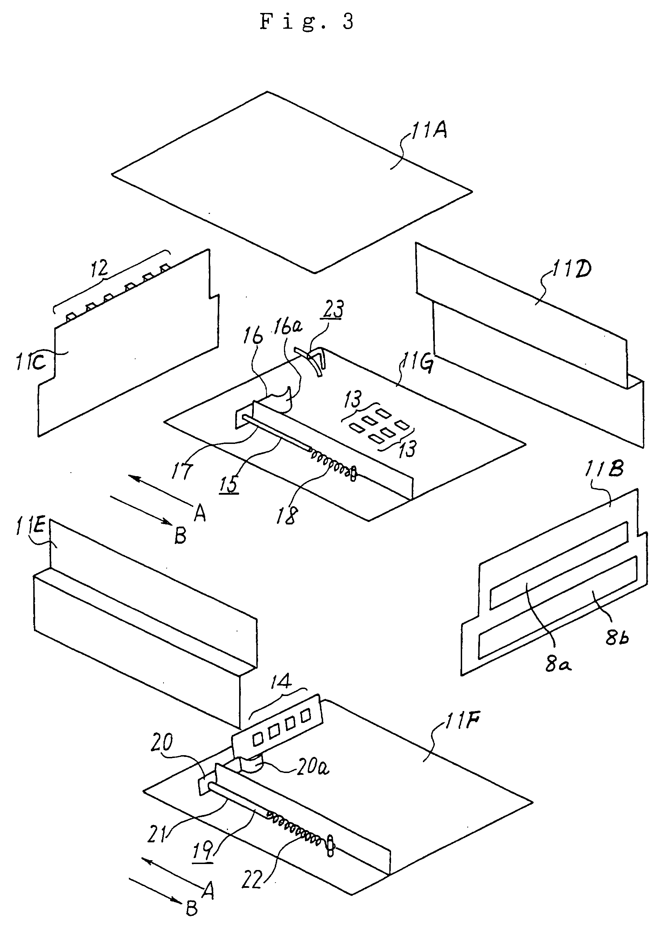

The connector device 10 used in the embodiment 1 will be described with reference to Figs. 2 and 3. Fig. 2 is a perspective view of the connector device 10, and Fig. 3 is an exploded perspective view of the connector device 10.

First, Fig. 2 shows a body constituting the connector device 10, and the body is formed of resin to have a substantially rectangular box-shape. In Fig. 3, the body 11 of the connector device 10 is exploded for description, and it is schematically shown by nullifying the thickness of each wall.

As shown in Figs. 2 and 3, the body 11 of the connector device 10 has an upper wall 11A, a front wall 11B, a rear wall 11C facing the front wall 11B, a pair of facing side walls 11D and 11E, a lowerwall 11F facing the upper wall 11A, and a partition wall 11G disposed at the middle position between the upper wall 11A and the lower wall 11F. In Fig. 3, these seven walls are shown as being separated from one another, however, this illustration is provided for only the description. Actually, these seven walls are formed of resin so as to be integral with one another as shown in Fig. 2. The body 11 of the connector device 10 has a substantially rectangular box-shape, a card inserting/ejecting port 8 is formed in the front wall 11B, and the other walls are closed. The card inserting/ejecting port 8 contains an inserting/ejecting port 8a for an SIM card 5, and an inserting/ejecting port 8b for a memory card 6. The SIM card 5 is accommodated through the inserting/ejecting port 8a in an upper mount portion formed between the upper wall 11A and the partition wall 11F, and also taken out from the inserting/ejecting port 8a. The memory card 6 is accommodated through the inserting/ejecting port 8b in the lower mount portion formed between the partition wall 11G and the lower wall 11F, and taken out from the inserting/ejecting port 8b.

In Figs. 2 and 3, 11 represents the body of the connector device 10, and 12 represents contact conductors secured to the outer surface of the rear wall 11C of the body 11. The contact conductors 12 and connection terminals (not shown) equipped to the second accommodating portion 7 of the housing 2 are brought into contact with one another, so that a board (not shown) contained in the connector device 10 and a board (not shown) contained in the cellular phone 1 are electrically connected to each-other. 13 represents contact conductors equipped to the upper surface of the partition wall 11G of the connector device 10, and an SIM card power supply portion (not shown) equipped on the surface of the SIM card 5 inserted from the inserting/ejecting port 8a is brought into contact with the contact conductors 13, so that the SIM card 5 and the board contained in the connector device 10 are electrically connected to each other. 14 represents contact conductors of a terminal board equipped on the upper surface of the lower wall 11F of the connector device 10, and a memory card power supply portion (not shown) equipped to the end surface of the memory card 6 inserted from the inserting/ejecting port 8b is brought into contact with the contact conductors 14, so that the memory card 6 and the board contained in the connector device 10 are electrically connected to each other.

15 represents a take-out mechanism portion disposed on the upper surface of the partition wall 11G of the connector device 10, and the SIM card 5 is taken out from the connector device 10 by actuating the take-out mechanism portion 15. The take-out mechanism portion 15 has a leaf spring 16, a joint member 17 and a coil spring 18.

The leaf spring 16 has a curved portion 16a. When the SIM card 5 is further pressed from the mount position and thus deforming force is applied to the curved portion 16a, restoring force occurs in the curved portion 16a. One end of the joint member 17 is secured to the leaf spring 16, and the other end thereof is secured to one end of the coil spring 18. The other end of the coil spring 18 is secured to the partition wall 11G of the body 11. The leaf spring 16 is pressed in through the operation of further pressing the SIM card 5 from the mount position, and in connection with this press, the coil spring 18 is extended, so that restoring force also occurs in the coil spring 18. The SIM card 5 is pressed out by the restoring force of the leaf spring 16 and the coil spring 18.

19 represents a take-out mechanism portion disposed on the upper surface of the lower wall 11F of the connector device 10, and the memory card 6 is taken out from the connector device 10 through the operation of the take-out mechanism portion 15. The take-out mechanism 19 has a leaf spring 20, a joint member 21 and a coil spring 22.

The leaf spring 20 has a curved portion 20a. When the memory card 6 is further pressed from the mount position and thus deforming force is applied to the curved portion 20a, deforming force occurs in the curved portion 20a. One end of the joint member 21 is secured to the leaf spring 20, and the other end thereof is secured to one end of the coil spring 22. The other end of the coil spring 22 is secured to the lower wall 11F of the body 11. The leaf spring 20 is pressed in by the further press operation of the memory card 6 from the mount position, and in connection with this press operation, the coil spring 22 is extended, so that deforming force also occurs in the coil spring 22. The memory card 6 is pressed out by the restoring force of the leaf spring 16 and the coil spring 18.

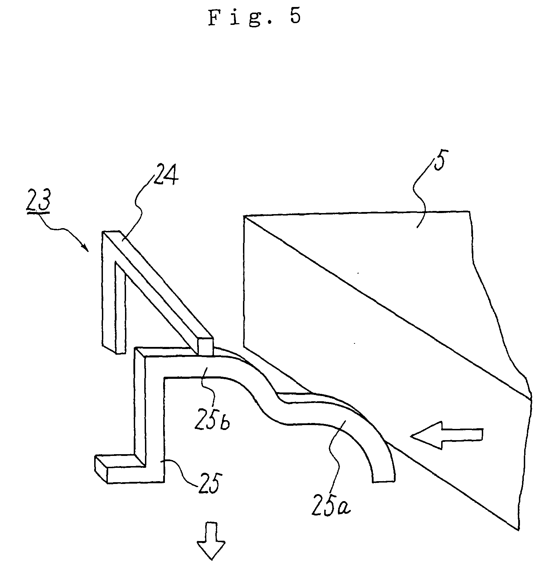

The connector device 10 is further equipped with detecting means 23. The detecting means 23 is disposed at an inner position of the partition wall 11G as shown in Fig. 3. The details of the detecting means 23 will be described with reference to Fig. 5. The detecting means 23 aims to detect whether the SIM card 5 is mounted in the connector device 10 or not, and has contact pieces 24, 25. The contact pieces 24, 25 are secured to the partition wall 11G of the body 11, and one end of the contact piece 24 comes into contact with the upper surface the contact piece 25. The contact piece 25 has a curved portion 25a and a contact portion 25b, and the contact piece 24 is brought into contact with the upper surface of the contact portion 25b of the contact piece 25. If the contact pieces 24, 25 come into contact with each other, current flows through the contact piece 24. Therefore, on the basis of the state that current flows, it is recognized that the SIMcard 5 is not mounted in the connector device 10.

The operation of the present invention according to the embodiment 1 will be described with reference to Figs. 1, 2, 3 and 5.

The operation when the memory card 6 is mounted in the cellular phone 1 will be described.

When the multi-functional lid 9 secured to the housing 2 is kept open, the memory card 6 is freely insertable/detachable into/from the connector device 10 mounted in the second accommodating portion 7. Under this state, the memory card 6 is inserted from the card inserting/ejecting port 8b of the connector device 10 and mounted in the connector device 10. After the memory card 6 is mounted in the connector device 10, the multi-functional lid 9 is closed to thereby prevent invasion of dust into the connector device 10.

When the multi-functional lid 9 is closed, the multi-functional lid 9 and the memory card 6 are kept to be in close contact with each other, and thus even when impact is applied to the cellular phone 1, the memory card 6 is prevented from being displaced in the connector device 10. Accordingly, occurrence of contact failure can be prevented between thememory card power supply portion of the memory card 6 and the conductors 13 of the connector 10.

The memory card power supply portion secured to the tip of the memory card 6 is brought into contact with the contact conductors 14 equipped to the connector device 10 while the memory card 6 is mounted in the connector device 10. On the basis of this contact, the memory card 6 and the board (not shown) contained in the connector device 10 are electrically connected to each other, and the connector device 10 is electrically connected to the board (not show) equipped to the cellular phone 1 through the contact conductors 12.

The operation when the memory card 6 is detached from the cellular phone 1. By setting the multi-functional lid 9 equipped to the housing 2 to an open state, the memory card 6 is allowed to be detached from the connector device 10 mounted in the second accommodating portion 7. Under this state, a worker further presses the memory card 6 to a further inner position of the connector device 10 (hereinafter referred to as "press-in direction A" ) , whereby force acting in the press-in direction A (hereinafter referred to as "press-in force") is applied to a part group containing the leaf spring 16, the joint member 17 and the coil spring 18. The press-in direction A is shown in Fig. 3. The leaf spring 16 and the joint member 17 are moved in the press-in direction A by the press-in force. Furthermore, one end of the coil spring 18 is fixed to the body 11, so that the length of the coil spring 18 is increased/reduced by the press-in force. Accordingly, the press-in force causes restoring force in the coil spring 18. Furthermore, the press-in force deforms the curved portion 16a equipped to the leaf spring 16. Accordingly, the press-in force causes restoring force in the curved portion 16a. When the worker stops pressing the memory card 6 to a further inner position of the connector device 10, the press-in force is removed. Accordingly, the memory card 6 is moved so as to be pressed out from the connector device 10 (hereinafter referred to as "press-out direction B") by the restoring force in the curved portion 16a and the restoring force in the coil spring 18. The press-out direction B is also shown in Fig. 3. By moving the memory card 6 in the press-out direction B, the memory card 6 protrudes from the connector device 10. The protrusion of the memory card 6 enables the worker to take out the memory card 6.

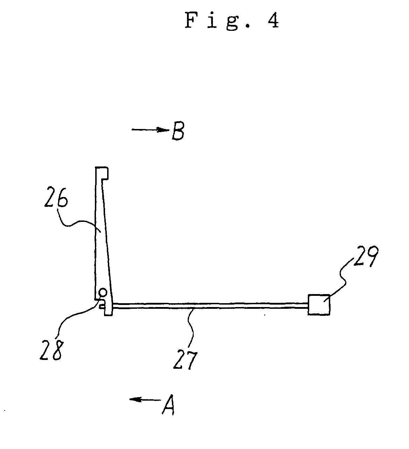

In addition to the take-out mechanism portion 15, another take-out mechanism portion as shown in Fig. 4 may be used. The other take-out mechanism portion will be described with reference to Fig. 4.

In Fig. 4, 26 represents a press-out member for pressing out the memory card 6, 27 represents a joint member secured to the press-out member 26, 28 represents a fulcrum secured to the press-out member 26, and 29 represents a press-out button secured to the joint member 27.

Next, the operation of the other take-out mechanism portion will be described with reference to Fig. 4.

When a worker presses the press-out button 29, the joint member 27 is moved in the press-in direction A. The movement of the joint member 27 in the press-in direction A allows the press-out member 26 to rotate around the fulcrum 28. Through this rotation, the press-out member 26 is moved in the press-out direction B. The movement of the press-out member 26 presses out the memory card 6 in the press-out direction B.

The memory card 6 and other memory cards which are generally used for cellular phones, etc. (hereinafter referred to as "general memory card") are equipped with protecting means which is actuated when the general memory cards are detached from the connector 10 and the other connector devices (hereinafter referred to as "general connector device").

Therefore, when the memory card 6 is detached from the connector device 10 with being supplied with power, the protecting means is actuated when the memory card 6 is detached from the connector device 10, the protecting means is actuated and the power supply to the memory card 6 is stopped. Accordingly, even when a memory card 6 would be damaged if it is detached while being supplied with power, the memory card 6 is prevented from being damaged even when the memory card 6 is detached from the connector device 10 with being supplied with power.

The operation when the SIM card 5 is inserted/detached into/from the cellular phone 1 will be described. The SIM card 5 is not equipped with any protecting means which is actuated when the SIM card 5 is detached from the connector device 10. Therefore, when the SIM card 5 is detached from the connector device 10 with being supplied with power, the SIM card 5 may bedamaged. Therefore, detectingmeans 23 for detecting whether the SIM card 5 is mounted in the connector device 10 is equipped to the connector device 10 in order to prevent the SIM card 5 from being damaged. Even when the SIM card 5 is detached from the connector device 10 while being supplied with power, the power supply to the SIM card 5 can be intercepted by the operation of the detecting means 23 while the SIM card power supply portion and the conductors 13 equipped to the connector 9 come into contact with each other.

The other operations are identical to those operations when the memory card 6 is inserted/ ejected into/from the cellular phone 1, and thus the description thereof is omitted. The operation of the detecting means 23 will be further described.

The operation of the detecting means 23 will be described with reference to Fig. 5.

When the SIM card 5 is not mounted in the connector device 10, the contact pieces 24 and 25 are brought into contact with each other. Under this state, current flows between the contact pieces 24 and 25, and the connector device 10 recognizes that the SIM card 5 is not mounted in the connector device 10.

When the SIM card 5 is inserted into the connector device 10, the SIM card 5 is put on the upper portion of the curved portion 25a of the contact piece 25. Accordingly, when the SIM card 5 is inserted into the connector device 10, the contact portion 25b is downwardly moved. Accordingly, the contact piece 24 and the contact piece 25 are kept in non-contact with each other. Under this state, no current flows between the contact piece 24 and the contact piece 25. The connector device 10 recognizes that no current flows between the contact piece 24 and the contact piece 25, whereby it recognizes that the SIM card 5 is not mounted in the connector device 10.

According to the construction described above, all the cards needed for the cellular phone 1 are accommodated in the second accommodating portion 7, and the mount position of any card is not overlapped with the position of the first accommodating portion 4. Accordingly, the thickness of the cellular phone 1 can be further reduced.

Furthermore, the thickness of the cellular phone 1 can be further reduced by installing into the cellular phone 1 a connector device 10 which is achieved by combining the connector device for the SIM card 5 and the connector device for the memory card 6.

### Embodiment 2

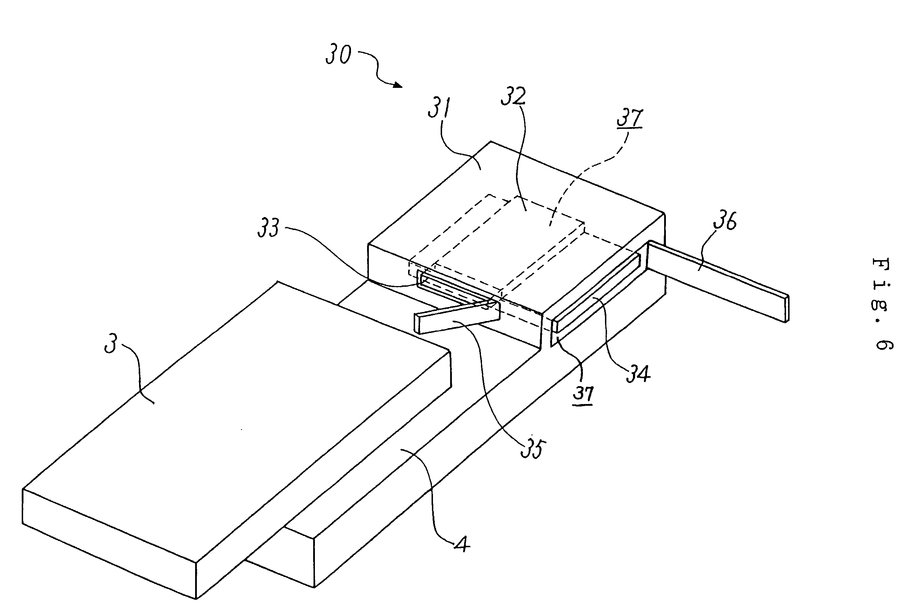

An embodiment 2 of the cellular phone of the present invention will be described with reference to Fig. 6. In Fig. 6, 30 represents a cellular phone according to the embodiment 2, 31 represents a housing used in the cellular phone 30, 32 represents a second accommodating portion formed in the housing 31, and 33 represents an SIM card inserting/ejecting port which is equipped to the second accommodating portion 32 so as to be opened to the first accommodating portion 4 side. 34 represents a memory card inserting/ejecting port which is equipped to the second accommodating portion 32 so as to be opened in a direction orthogonal to the SIM card inserting/ejecting port 33. 35 represents a multi-functional lid for closing the SIM card inserting/ejecting port 33. The multi-functional lid 35 prevents invasion of dust into a connector device 37 described later, and supports the SIM card 5 so that the position of the SIM card 5 is fixed in the connector device 37. 36 represents a multi-functional lid for closing the memory card inserting/ejecting port 34, and it prevents invasion of dust into the connector device 37 described later and also supports the memory card 6 so that the position of the memory card 6 is fixed in the connector device 37. 37 represents the connector device secured to the second accommodating portion 32. In Fig. 6, the detailed description of the connector device 37 is omitted. In Fig. 6, the other construction is the same as the embodiment 1, and thus the description thereof is omitted by applying the same reference numerals.

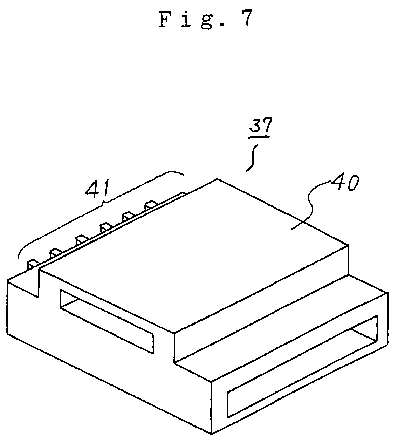

The connector device 37 used in the embodiment 2 will be described with reference to Fig. 7.

In Fig. 7, 40 represents the body of the connector device 37, and it is different from the embodiment 1 in that the inserting/ejecting direction of the SIM card 5 into/from the connector device 37 is perpendicular to the inserting/ejecting direction of the memory card 6 into/from the connector device 37. 41 represents contact conductors which are brought into contact with connection terminals (not shown) equipped to the second accommodating portion 32, and each of the conductors 41 and a board (not shown) contained in the cellular phone 30 are electrically connected to each other through the contact terminals. The other construction is the same as the embodiment 1, and the description thereof is omitted by applying the same reference numerals.

The operation of the construction of the embodiment 2 will be described. There will be described a case where the SIM card 5 is inserted/ejected into/from the cellular phone 30 in the embodiment 2.

When the cellular phone 30 is operated, the battery pack 3 is mounted in the first accommodating portion 4 of the cellular phone 30. Furthermore, the SIM card inserting/ejecting port 33 is covered by the battery pack 3. Accordingly, when the SIM card is detached while the cellular phone 3 is operated, the battery pack 3 is first detached from the first accommodating portion 4. After the battery pack 3 is detached from the first accommodating portion 4, the multi-functional lid 35 is detached from the second mount portion 32. After the multi-functional lid 35 is detached from the second accommodating portion 32, the SIM card 5 is allowed to be insertable/detachable into/from the connector device 37. Under this state, the SIM card 5 is inserted/detached into/ from the connector device 37. The mount or take-out operation is carried out in the same manner as the embodiment 1, and thus the description thereof is omitted. Furthermore, the detaching operation of the-memory card 6 from the cellular phone 30 is also carried out in the same manner as the embodiment 1, and thus the description is omitted.

The operation of the connector device 37 is different from the embodiment 1 in that the inserting/ejecting operation of the SIM card 5 into/from the connector device 37 is different from the inserting/ejecting direction of the memory card 6 from the connector device 37. The other construction is the same as the embodiment 1, and thus the description thereof is omitted.

According to the construction described above, the SIM card 5 is not allowed to be inserted/ejected into/from the connector device 37 unless the battery pack 3 is detached from the first accommodating portion 4. Therefore, there is no risk that the SIM card 5 is detached under the state that power is supplied to the SIM card 5.

Furthermore, the memory card 6 can be inserted/ejected into/from the connector device 37 irrespective of the presence or absence of the battery pack 3.

### Embodiment 3

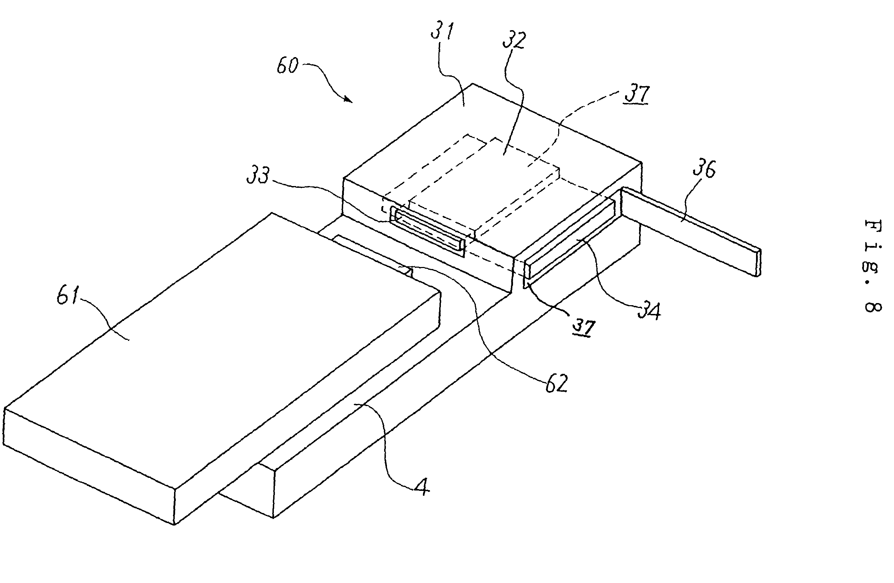

An embodiment 3 of the cellular phone according to the present invention will be described with reference to Fig. 8.

In Fig. 8, 60 represents a cellular phone according to an embodiment 3, 61 represents a battery pack used in the embodiment 3, and 62 represents a support member secured to the battery pack 61. The support member 62 is equipped so as to project and face the SIM card inserting/ejecting port 33, and has the same function as the multi-functional lid 35 in the embodiment 2. The other construction is the same as the embodiment 1 and the embodiment 2, and thus the description thereof is omitted.

The operation of the embodiment 3 will be described with reference to Fig. 8. In the embodiment 3, the battery pack 61 is detached from the cellular phone 60, and also the SIM card 5 is allowed to be insertable/detachable into/from the connector device 37. The other operation is the same as the embodiment 1 and the embodiment 2, and thus the description is omitted.

According to the construction described above, the battery pack 61 is equipped with the support member 62, so that the number of parts can be reduced and the working procedure can be eliminated.

### Embodiment 4

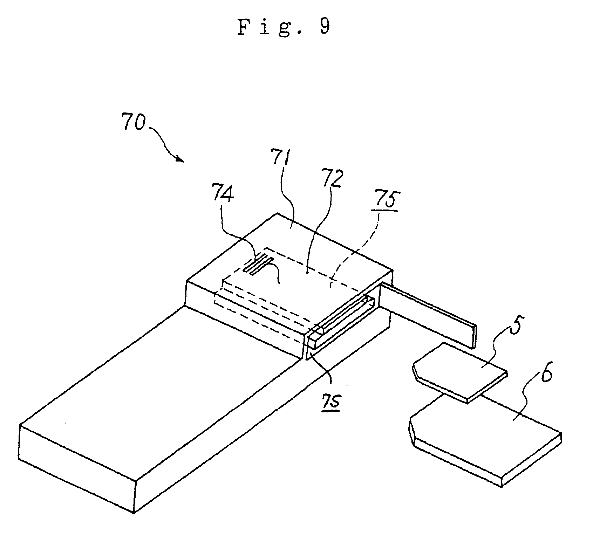

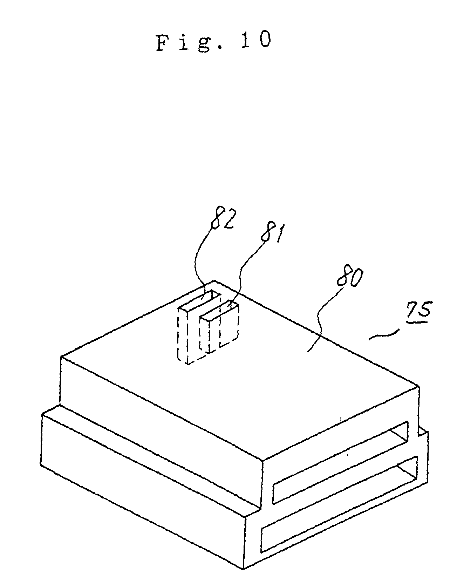

An embodiment 4 of the cellular phone according to the present invention will be described with reference to Figs. 9 and 10.

In Figs. 9 and 10, 70 represents a cellular phone according to the embodiment 4, 71 represents a housing used in the cellular phone 70, 72 represents a second accommodating portion formed in the housing 71, 73 represents a visible hole formed on the second accommodating portion 72 (here, a window is referred to as a visible hole). The inside of the second accommodating portion 72 can be viewed from the outside of the housing 70 through the visible hole 73. 74 represents a visible hole formed on the second accommodating portion 72, and the inside of the second accommodating portion 72 can be viewed from the outside of the housing 70 through the visible hole 74. 75 represents a connector device used in the embodiment 4. 80 represents the body of the connector device 75. The body 80 is designed so that the mount position of the SIM card 5 is nearer to the visible holes 73 and 74 formed on the second accommodating portion 72 than the mount position of the memory card 6. The size of the SIM card 5 is smaller than the size of the memory card 6. 81 represents a visible hole formed on the upper wall 80A of the body 80, and it is visually checked through the visible hole 81 whether the SIM card 5 is mounted in the connector device 75. 82 represents a visible hole formed on the upper wall 80A of the body 80, and it is visually checked whether the memory card 6 is mounted in the connector device 75. In the embodiment 4, an opening is formed at an inner position of the partition wall corresponding to the partition wall 11G, and existence of the memory card 6 is visually checked from the visible hole 82 through the opening. The other construction is the same as the embodiment 3, and the description thereof is omitted by applying the same reference numerals.

The operation of the embodiment 4 will be described with reference to Fig. 9.

When the SIM card 5 is mounted in the connector device 75, the SIM card 5 can be viewed through the visible hole 73 and the visible hole 81. When the SIM card 5 is detached from the connector device 75, the inside of the connector device 75 is viewed through the visible hole 73 and the visible hole 81. It is preferable in enhancement of visibility that the inside of the connector device 75 is made different in color from the SIM card 5.

When the memory card 6 is mounted in the connector device 75, the memory card 6 is viewed through the visible hole 74 and the visible hole 82. When the memory card 6 is detached from the connector device 75, the inside of the connector device 75 is viewed through the visible hole 74 and the visible hole 82. It is preferable in enhancement of visibility that the inside of the connector device 75 is made different in color from the SIM card 5.

According to the construction described above, it can be easily checked whether the SIM card 5 and the memory card 6 are mounted in the collector device 75. Furthermore, this check method needs no electrical part, and thus the mount or non-mount of the SIM card 5 and the memory card 6 can be checked by a small number of parts.

As described above, according to the present invention, plural cards needed for the cellular phone are collectively mounted in the second accommodating portion, and the mount position of any card is not overlapped with the position of the first accommodating portion, so that the thickness of the cellular phone can be reduced.

The present invention is designed so that it can be checked whether at least one of different types of plural cards is mounted in the connector device in the second accommodating portion, so that it can be checked whether at least one of the cards is mounted in the second accommodating portion.

According to the present invention, a smaller size of card of cards different in size is disposed to be nearer to the windows, so that it is can be checked whether different types of plural cards are mounted in the second accommodating portion.

According to the present invention, one card inserting/ejecting port is covered by the battery pack, so that some of cards cannot be inserted/ejected unless the battery pack is detached from the cellular phone. Accordingly, one card is prevented from being detached from the cellular phone while being supplied with power, and cards other than the one card can be inserted/ejected even when the battery pack is mounted in the cellular phone.

According to the present invention, the battery pack is equipped with the member which covers the card inserting/ejecting port, so that the number of parts can be reduced and the card inserting/ejecting operation speed can be increased.

### INDUSTRIAL APPLICABILITY

The present invention is used for a cellular phone.

## Claims

1. A cellular phone in which different types of plural cards are freely detachably mounted, comprising:
a housing having a first accommodating portion and a second accommodating portion;
wherein the second accommodating portion is disposed on a position which is non-overlapped with the first accommodating portion, the first accommodating portion accommodates a battery pack, and the second accommodating portion accommodates the different types of plural cards while the card are stacked.

2. The cellular phone according to claim 1, wherein the second accommodating portion is designed so as to check whether at least one of the different types of plural cards is mounted in the cellular phone.

3. The cellular phone according to claim 2, wherein the second accommodating portion has windows formed on the housing, and the plural cards are different in size, and a smaller card is disposed to be nearer to the windows so that the mount states of the plural cards can be checked from the windows.

4. The cellular phone according to any one of claims 1 to 3, wherein the second accommodating portion has plural card inserting/ejecting ports and one of the plural card inserting/ejecting ports is covered by the battery pack.

5. The cellular phone according to claim 4, wherein the battery pack has a member covering the one of the plural card inserting/ejecting ports.
